# EUROPÄISCHE PATENTSCHRIFT

(11) **EP 3 444 021 B1**
(45) Veröffentlichungstag und Bekanntmachung des Hinweises auf die Patenterteilung: **15.04.2020**
(21) Anmeldenummer: 17186507.4
(22) Anmeldetag: 16.08.2017
(51) Int. Cl.: B01D 63/02, B01D 63/06, B01D 71/32

(54) **VORRICHTUNG ZUM VERARBEITEN EINES FLUIDS UND HERSTELLUNGSVERFAHREN EINER SOLCHEN**
DEVICE FOR PROCESSING A FLUID AND MANUFACTURING METHOD FOR SAME
DISPOSITIF DE TRAITEMENT D'UN FLUIDE ET PROCÉDÉ DE FABRICATION D'UN TEL DISPOSITIF

(43) Veröffentlichungstag der Anmeldung: 20.02.2019
(73) Patentinhaber: MemO3 GmbH, 4313 Möhlin (CH)
(72) Erfinder: Kiefer, Johannes, 4313 Möhlin (CH)
(74) Vertreter: P&TS SA (AG, Ltd.)

(56) Entgegenhaltungen:
- DE-B- 1 213 384
- JP-A- 2009 241 041
- US-A1- 2013 075 321

## Beschreibung

### Technisches Gebiet

Die Erfindung bezieht sich auf eine Vorrichtung zum Verarbeiten eines Fluids und ein Herstellungsverfahren einer solchen Vorrichtung.

### Stand der Technik

Membranen aus Polytetrafluorethylen (PTFE) eröffnen aufgrund der besonderen Materialeigenschaften Anwendungsgebiete, die bisher entweder nur von keramischen Membranen abgedeckt werden konnten oder für Membranverfahren nicht zugänglich waren.

Flachmembranen aus PTFE sind seit längerem bekannt und werden grosstechnisch z.B. als Flüssigkeitssperre in Bekleidung oder zur Gasfiltration eingesetzt. Bevorzugt für technische Anwendungen werden aus verschiedenen Gründen Membranen in tubulärer Bauform. Diese können in Fluidbehandlungsanlagen einfacher integriert werden, sind strömungstechnisch einfacher beherrschbar und bieten für Reinigungs-und Desinfektionsprozesse eine bessere Zugänglichkeit der Gesamtkonstruktion. Um technische sinnvolle Einheiten zu erhalten, ist es in aller Regel erforderlich, mehrere Membranröhrchen (Kapillaren) so zusammenzufassen und mit gemeinsamen Anschlüssen zu versehen dass das auf der Aussenseite der Membranröhrchen befindliche Fluid in einem Mantelrohr mit einem oder mehreren Anschlüssen gesammelt bzw. verteilt werden kann und das auf der Innenseite der Membranröhrchen befindliche Fluid über mindestens einen, normalerweise zwei Anschlüsse zu- bzw. abgeführt werden kann.

Der Innen- und Aussenraum der Membran muss so gegeneinander abgedichtet werden, dass die aufgabengemässe Verwendbarkeit sichergestellt ist. Dabei kommen bei keramischen Membranen und Polymermembranen unterschiedliche Lösungen zum Einsatz.

Die Abdichtung von Polymermembranen erfolgt meist über ein sogenanntes Potting, d.h. die Enden einzelner Membranröhrchen werden vertikal in einer Ebene gebündelt, z.B. über einen äusseren Metallring, und die Zwischenräume werden mit einer Vergussmasse (z.B. aus Polyurethan oder Epoxidharz) ausgefüllt. Nach dem Aushärten der Vergussmasse bilden der äussere Ring, die Vergussmasse und die darin axial eingebetteten Membranröhrchen eine fest miteinander verbundene Kopfplatte. Dieser Vorgang wird am anderen Ende des Membranbündels wiederholt, es entsteht ein Modul, das aus zwei Kopfplatten und dem dazwischenliegenden Membranbündel besteht. Werden nun die beiden Kopfplatten mit üblichen Methoden gegen ein äusseres Mantelrohr abgedichtet, so entsteht ein Rohrmodul, bei dem die Innenseite und die Aussenseite der Membran vollständig gegeneinander abgedichtet sind und die einzige Möglichkeit zum Austausch zwischen den beiden Räumen des Moduls die Membran darstellt.

Eine weitere Möglichkeit, die bei thermoplastischen Kunststoffen zum Einsatz kommen kann, ist das Verschweissen von Membranröhrchen und einer Lochplatte, wenn beide aus einem schweissbaren Kunststoff wie etwa Polyethylen(PE) oder Polypropylen (PP) hergestellt sind. Die Lochplatte wird mit einer Anzahl von Bohrungen versehen, jede Bohrung enthält ein Membranröhrchen. Die Verbindung der Membranröhrchen und der Lochplatte zur Kopfplatte erfolgt dann durch verschweissen der einzelnen Röhrchen mit dem sie umgebenden Material der Lochplatte.

Die Abdichtung von tubularen Membranen aus keramischen oder anderen nicht verformbaren Materialien erfolgt in der Regel in einer vorgefertigten Kopfplatte aus Metall oder einem anderen nicht-plastischen Material, die definierte, häufig leicht konische, Öffnungen zur Aufnahme je eines Keramikstabs besitzt. Die Keramikstäbe besitzen in der Regel kreisrund geschliffene Enden, die Abdichtung erfolgt dann radial mittels O-Ring-Dichtungen die von einer weiteren Kopfplatte im Konusbereich verpresst werden und am geschliffenen Ende des Keramikstabs und an der Öffnung der Kopfplatte dichtend anliegen. Auch Konstruktionen mit einem zusätzlichen Pressring zwischen O-Ring-Dichtung und Kopfplatte sind möglich. Da keramische Membranen aus einem gröberen Stützkörper und einer feineren Membran bestehen, ist es zusätzlich erforderlich die Stirnfläche abzudichten. In der Regel wird dazu ein geeignetes Harz oder Polymer verwendet, das in die gesinterte Struktur des Membranstützkörpers eindringt und diesen flüssigkeits- und /oder gasdicht verschließt. Mit dieser Maßnahme ist ein einen Fluid-Durchtritt nur noch durch die Membran möglich.

Membranen aus PTFE verfügen über die Materialeigenschaften des PTFE. Dessen spezielle chemische Eigenschaften wie eine praktisch inerte Oberfläche verhindern die Anwendung üblicher Pottingmaterialien da diese keine ausreichenden Haft- und Klebeeigenschaften für das PTFE aufweisen. Der Einsatz der O-Ring-Abdichtung wie bei einem keramischen Membranelement ist wegen der leichten Verformbarkeit der PTFE-Membranen nicht möglich.

Eine mögliche Lösung des Dichtungsproblems, das Einklemmen und die Eigendichtung über Hohlstecker aus Stahl oder Kunststoff in einer Kopfplatte aus nichtplastischem Material wie z.B. PVDF , wird in US 2013/0075321 A1 beschrieben. Diese Lösung macht sich die dichtenden Eigenschaften des PTFE und die leichte Verformbarkeit zu Nutze, indem die mikroporöse Membran selbst durch Verpressen als Dichtung verwendet wird. Ein Nachteil ist die glatte Oberfläche der Bohrungen in der Kopfplatte, aufgrund der guten Gleiteigenschaften von PTFE kann die axiale Fixierung nicht in jedem Fall gewährleistet werden. Eine formschlüssige Gestaltung der Oberfläche der Innenseite der Bohrung ist aufgrund der Bearbeitungsart der Kopfplatte schwierig und aufwendig. Nachteilig ist auch, dass diese Lösung bei technischen Modulen eine große Anzahl von Einzelteilen und, damit verbunden, einen erheblichen Arbeitsaufwand zur Montage erfordert. Technisch nachteilig ist eine Verengung des Strömungskanals, des inneren Durchmessers des Membranröhrchens, die z.B bei Filtrationsprozessen zu geänderten strömungstechnischen Eigenschaften führen kann und damit die Parameter des eigentlichen Membranprozesses störend beeinflusst.

### Darstellung der Erfindung

Es ist Aufgabe der Erfindung, eine verbesserte Vorrichtung zum Verarbeiten von Fluiden bereitzustellen, die die Probleme des Stands der Technik reduziert oder beseitigt.

Diese Aufgabe wird mit einer Vorrichtung nach Anspruch 1 und einem Herstellungsverfahren nach Anspruch 12 gelöst.

Da die Anschlusssegmente des Anschluss zur Verbindung der Membranleitungen einen Hohldorn aufweisen, wird sowohl der Vorgang der Verbindung vereinfacht als auch die Verbindungsqualität erhöht. Da Vorrichtungen zum Verarbeiten von Fluiden mit Membranleitungen oft eine hohe Anzahl von Membranleitungen und sehr dünne Membranleitungen aufweisen, führt dies zu einer signifikanten Vereinfachung des Verbindungsvorgangs.

Die abhängigen Ansprüche betreffen besonders vorteilhafte Ausführungsbeispiele der oben beschriebenen Ausführungsformen.

In einem Ausführungsbeispiel, weist das mindestens eine Anschlusssegment eine Mehrzahl von Anschlusssegmenten und die mindestens eine Membranleitung eine Mehrzahl von Membranleitungen auf, wobei jede Membranleitung mit einem der Anschlusssegmente verbunden ist.

In einem Ausführungsbeispiel, weist das mindestens eine Anschlusssegment jeweils eine Fluidöffnung und einen Hohldorn auf, wobei die Fluidöffnung in den Hohldorn mündet. Da der Hohldorn aus dem Anschlusselement hervorsteht, ist es besonders einfach die entsprechende Membranleitung auf den Hohldorn zu stecken. Dies erlaubt darüber hinaus eine besonders dichte und stabile Verbindung mit der Membranleitung.

In einem Ausführungsbeispiel ist das Anschlusselement mit einem additiven Herstellungsverfahren hergestellt. Dies erlaubt besonders dichte und/oder stabile und/oder kleine Anschlusssegmente in dem Anschlusselement zu realisieren. Es erlaubt darüber hinaus, die Anordnung, die Anzahl und Dimension der Anschlusssegmente und der Membranleitungen einfach für jede Anwendung zu variieren ohne den Produktionsaufwand signifikant zu erhöhen.

In einem Ausführungsbeispiel ist das Anschlusselement so ausgebildet ist, dass zumindest eine Untergruppe der Anschlusssegmente aus einem gemeinsamen Materialstück hergestellt ist. Dies erlaubt eine besonders stabile Ausführung der Anschlusssegmente und eine einfachere Montage des Anschlusses.

In einem Ausführungsbeispiel verändert sich der Aussenumfang und/oder Aussendurchmesser des mindestens einen Hohldorns (13) in axialer Richtung der Hohldorns (13), um das Einführen des mindestens einen Hohldorns (13) in die mindestens eine Membranleitung (2) zu erleichtern und/oder um die mindestens eine Membranleitung (2) zu dem mindestens einen Hohldorn (13) besser abzudichten.

In einem Ausführungsbeispiel weist der Anschluss ein Anpressmittel auf, das die Aussenseite der mindestens einen Membranleitung auf den zugehörigen Hohldorn drückt. Dadurch wird der axiale Halt der Membranleitung auf dem Hohldorn verbessert und/oder die Dichtheit zwischen Membranleitung und dem Hohldorn verbessert.

In einem Ausführungsbeispiel weist das Anpressmittel ein Gegenelement auf, das eine Mehrzahl von Ausnehmungen aufweist, die die Hohldorne mit den Membranleitungen umfänglich umschliessen und so geformt sind, dass das Gegenelement auf die Aussenseite der Membranleitungen drückt. Dieses Gegenelement hat den Vorteil, dass nur ein Gegenelement oder nur wenige Teilgegenelemente des Gegenelements benötigt wird oder werden, um eine hohe Anzahl an Membranleitungen radial auf die Hohldorne zu drücken. Dies vereinfacht signifikant die Montage des Anpressmittels.

### Kurze Beschreibung der Figuren

Die Erfindung wird anhand der beigefügten Figuren näher erläutert, wobei zeigen
- **Fig. 1**: ein Ausführungsbeispiel einer Vorrichtung zum Verarbeiten von Fluiden;
- **Fig. 2**: einen Schnitt der Linie II-II aus Fig. 3 durch ein Anschlusselement eines Anschlusses;
- **Fig. 3**: einen Schnitt der Line III-III der Fig. 2 durch das Anschlusselement des Anschlusses aus Fig. 2;
- **Fig. 4**: ein erstes Ausführungsbeispiel eines Anpressmittels;
- **Fig. 5**: ein zweites Ausführungsbeispiel eines Anpressmittels;
- **Fig. 6**: eine Explosionsdarstellung eines Ausführungsbeispiels einer Vorrichtung zum Verarbeiten von Fluiden mit einem Gegenelement als Anpressmittel;
- **Fig. 7**: ein erstes Ausführungsbeispiel der zusammengebauten Vorrichtung aus Fig. 6;
- **Fig. 8**: ein erstes Ausführungsbeispiel der zusammengebauten Vorrichtung aus Fig. 6;
- **Fig. 9**: ein erstes Ausführungsbeispiel des Gegenelements mit mehreren Teilgegenelementen;
- **Fig. 10**: ein zweites Ausführungsbeispiel des Gegenelements mit mehreren Teilgegenelementen; und
- **Fig. 11**: ein drittes Ausführungsbeispiel des Gegenelements mit mehreren Teilgegenelementen.
- **Fig. 12**: ein Ausführungsbeispiel eines Aufnahmeelements für die Aufnahme von mehreren Anschlusselementen.

### Wege zur Ausführung der Erfindung

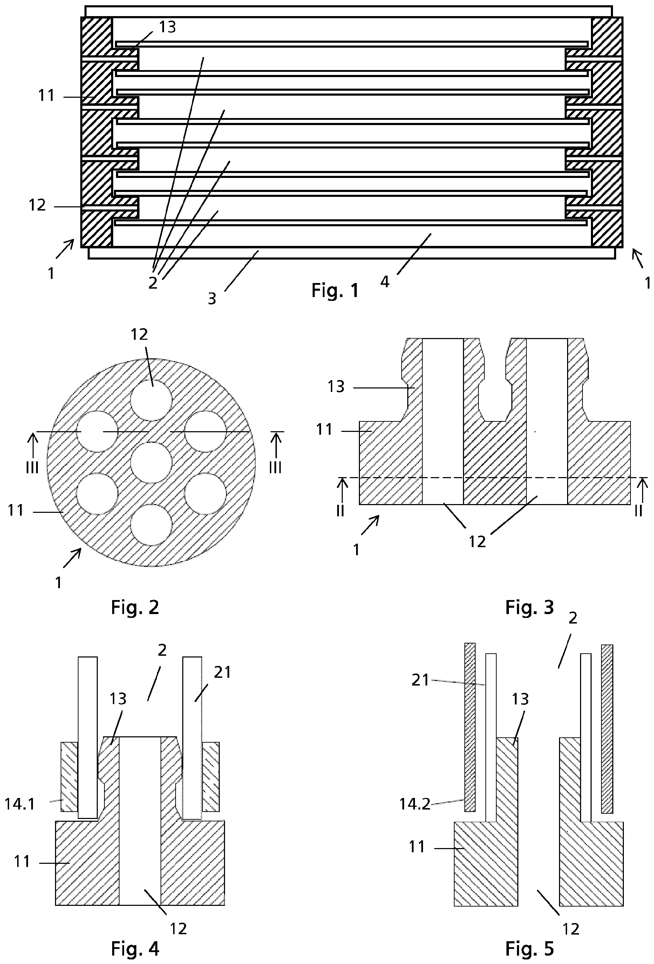

Fig. 1 zeigt ein schematisches Ausführungsbeispiel einer Vorrichtung zum Verarbeiten von Fluiden. Die Vorrichtung weist vorzugsweise mindestens einen Anschluss 1 und mindestens eine Membranleitung 2 auf.

Die mindestens eine Membranleitung 2 hat ein erstes Ende und ein zweites Ende. Die mindestens eine Membranleitung 2 ist ausgebildet ein Fluid von dem ersten Ende zu dem zweiten Ende oder umgekehrt zu leiten. Das erste Ende einer Membranleitung 2 ist mit einem ersten Anschluss 1 verbunden. Das zweite Ende der Membranleitung 2 ist vorzugsweise mit einem zweiten Anschluss 1 verbunden. Dies erlaubt ein zu verarbeitendes Fluid in einen ersten Anschluss 1, durch die Membranleitung 2 und aus dem zweiten Anschluss 1 wieder heraus zu leiten (oder umgekehrt). Die Verarbeitung des Fluids passiert somit in einer Durchflussanordnung in der mindestens einen Membranleitung 2 zwischen dem ersten und zweiten Anschluss 1. Der zweite Anschluss 1 ist vorzugweise wie der erste Anschluss 1 ausgebildet. Der zweite Anschluss 1 kann aber auch anders ausgebildet sein. Es ist auch möglich, das zweite Ende wieder mit dem ersten Anschluss 1 zu verbinden oder das Fluid andersartig aus dem zweiten Ende auszuleiten. Fluide können Gase oder Flüssigkeiten oder flüssig-gas Gemische oder Mischung aus einem Gas, einer Flüssigkeit oder einem flüssig-gas Gemisch mit Festkörperpartikeln sein.

Die Wandung 21 der Membranleitung 2 ist aus einem Membranmaterial hergestellt, das einen Transport eines Stoffs durch die Wandung 21 der Membranleitung 2 erlaubt. Der durch die Wandung 21 transportierte Stoff kann flüssig, gasförmig oder als Festkörperpartikel vorliegen. Dadurch kann als Fluidverarbeitung ein Entfernen eines Stoffs aus und/oder ein Hinzufügen eines Stoffs zu dem in der Membranleitung 2 eingeführten Fluids erreicht werden. Bei Entfernen eines Stoffs wird ein den Stoff enthaltenes Fluid durch die Membranleitung 2 geleitet, wobei der Stoff durch die Wandung 21 der Membranleitung 2 tritt oder transportiert wird. So reduziert sich der Anteil des Stoffs in dem Fluid am zweiten Ende der Membranleitung 2 im Vergleich zu dessen ersten Ende (auch auf 0% an dem zweiten Ende). Bei einem Hinzufügen eines Stoffs wird dem durch die Membranleitung 2 geleiteten Fluid ein Stoff hinzugefügt, in dem der Stoff durch die Wandung der Membranleitungen 2 in die Membranleitung 2 tritt oder transportiert wird. So erhöht sich der Anteil des Stoffs in dem Fluid am zweiten Ende der Membranleitung 2 im Vergleich zu dessen ersten Ende (auch von 0% am ersten Ende). Somit wird ein erstes Fluid in Membranleitung 2 eingeleitet, ein Stoff durch die Wandung 21 der Membranleitung 2 transportiert, so dass das erste Fluid von einem ersten Ende zu dem zweiten Ende geleitet und durch den Stofftransport durch die Wandung 21 zu einem aus dem zweiten Ende austretenden zweiten Fluid verarbeitet wird. Der Stoff ist zum Beispiel Teil des ersten Fluids und reduziert durch den Austritt aus der Membranleitung 2 durch die Wandung 21 seine Konzentration in dem ersten Fluid, so dass das erste Fluid zu dem am zweiten Ende austretenden zweiten Fluid verarbeitet wird. Der Stoff kann auch durch die Wandung 21 dem ersten Fluid in der Membranleitung 2 hinzugefügt werden, so dass sich das erste Fluid mit dem Stoff zu dem zweiten Fluid vermischt. Es ist ebenfalls möglich, dass die Wandung mehrere Stoffe durch die Wandung transportiert. Diese Stoffe können unterschiedliche Phasen (fest, flüssig, gasförmig) haben und/oder unterschiedliche Richtung haben. Dadurch kann als Fluidverarbeitung zum Beispiel eine flüssig-flüssig Extraktion oder eine Filtration erreicht werden. Dadurch kann auch eine Be- oder Entgasung von Flüssigkeiten erreicht werden. Dieses Verfahren eignet sich zum Beispiel sehr gut für die Verarbeitung von Lebensmittelfluiden. Das Membranmaterial kann eine mikroporöse Membran oder eine dichte Membran oder ein anderer Membrantyp sein. Das Membranmaterial ist vorzugsweise ein Kunststoff oder Polymer, vorzugsweise ein Fluorpolymer, vorzugsweise ein Polytetrafluorethylen (PTFE).

In einem Ausführungsbeispiel ist die Membranleitung 2 zumindest im Bereich des ersten und/oder des zweiten Endes kompressibel oder elastisch. In einem Ausführungsbeispiel ist die Membranleitung 2 ein Schlauch oder ein schlauchartiges Rohr. In einem Ausführungsbeispiel ist die Membranleitung 2 elastisch und/oder flexibel.

In einem Ausführungsbeispiel ist der Innendurchmesser der Membranleitung 2 zwischen 0,5 mm und 50 mm. In einem Ausführungsbeispiel ist die Wandstärke der Membranleitung 2 zwischen 0,005 mm und 5 mm.

In einem Ausführungsbeispiel weist die Vorrichtung eine Mehrzahl von Membranleitungen 2 (mit den oben beschriebenen Eigenschaften) auf. Je nach Anwendung kann die Vorrichtung mehr als zwei, zehn, fünfzig, hundert, fünfhundert oder tausend Membranleitungen 2 aufweisen. Durch die Anzahl der Membranleitungen 2 kann zum Beispiel die Membranfläche geregelt werden.

Der Anschluss 1 ist ausgebildet, zumindest die ersten Enden der zumindest einen Membranleitung 2 mit dem Anschluss 1 zu verbinden. Der Anschluss 1 weist ein Anschlusselement 11 auf. Das Anschlusselement 11 formt mindestens ein Anschlusssegment, vorzugsweise eine Mehrzahl an Anschlusssegmenten aus. Das Anschlusssegment ist ein Bereich des Anschlusselements 11 mit einer Fluidöffnung 12 und einem Hohldorn 13. Die Fluidöffnung 12 mündet in den Hohldorn 13, insbesondere in die Öffnung des Hohldorns 13. Der Hohldorn 13 weist eine axiale Richtung auf. Die axiale Richtung der Fluidöffnung 12 entspricht vorzugsweise der axialen Richtung des Hohldorns 13. Der Hohldorn 13 steht von dem Anschlusselement 11 hervor, so dass das erste Ende der Membranleitung 2 in axialer Richtung auf den Hohldorn 13 gesteckt werden kann. Die Membranleitung 2 wird dabei über oder auf den Aussenumfang des Hohldorns 13 gesteckt, gestülpt oder befestigt, so dass die Membranleitung 2 im montierten Zustand den Hohldorn 13 im Inneren der Membranleitung 2 einschliesst. Das distale (entfernte) Ende des Hohldorns 13, in dem die Fluidöffnung 12 mündet, wird somit von der montierten Membranleitung 2 umschlossen, so dass die Fluidöffnung 12 in das Innere der Membranleitung 2 mündet. Das distale Ende des Hohldorns 2 ist das zu der Membranleitung 2 hin gerichtete Ende des Hohldorns 2.

Vorzugsweise ist ein Anschlusssegment 11 so ausgebildet, dass die Fluidöffnung 12 und der Hohldorn 13 aus einem Materialblock ausgebildet sind, d.h. einstückig ausgebildet sind. Vorzugsweise ist das Anschlusselement 11 so ausgebildet, dass die Fluidöffnungen 12 und die Hohldorne 13 zumindest einer Mehrzahl von Anschlusssegmenten aus einem gemeinsamen Materialblock ausgebildet sind, d.h. einstückig ausgebildet sind. Fig. 2 und 3 zeigen einen Schnitt durch das Anschlusselement 11 mit einer Mehrzahl von Anschlusssegmenten. Fig. 2 und 3 zeigen ein Anschlusselement 11, in dem alle Anschlusssegmente (hier sieben) aus einem Materialblock ausgeformt sind. Durch die Einstückigkeit wird eine hohe Stabilität der Hohldorne 13 in dem Anschlusselement 11 erreicht. Vorzugsweise sind alle Anschlusssegmente des Anschlusses in dem gleichen Anschlusselement einstückig ausgebildet. Allerdings ist es auch möglich, dass das Anschlusselement 11 aus Teilanschlusselementen besteht, die jeweils eine Mehrzahl von Anschlusssegmenten aufweisen und jeweils einstückig ausgebildet sind.

Vorzugsweise ist das Anschlusselement 11 mit einem additiven Herstellungsverfahren, z.B. einem 3D Druckverfahren, hergestellt. Dies hat den Vorteil, dass auch eine hohe Anzahl von Anschlusssegmenten und/oder sehr kleine Hohldorne 13 schnell, stabil und präzise hergestellt werden können. Da die Membranleitungen 2 und die Anschlusselemente 11 für jede Anwendung speziell angefertigt werden müssen, erlaubt ein additives Herstellungsverfahren eine schnelle und präzise Herstellung eines robusten Anschlusselements 11. Klassische spanende Herstellungsverfahren sind problematisch und zeitaufwendig bei einer hohen Anzahl von Anschlusselementen und/oder sehr kleinen Hohldornen 13. Darüber hinaus sind bestimmte Formen der Hohldorne 13 mit einem spanenden Herstellungsverfahren nicht möglich. Auch Spritzguss- oder andere Gussverfahren sind in diesem Fall ebenfalls problematisch, da das Gussmaterial die kleinen Hohlräume evtl. nicht sauber füllen kann, und sind darüber hinaus ungeeignet für kleine Stückzahlen. Allerdings wäre es alternativ für manche Ausführungsbeispiel auch möglich, das Anschlusselement 11 anders herzustellen, z.B. mit einem spanenden Herstellungsverfahren, wie z.B. eine Fräs- und/oder Bohrmaschine, oder mit einem Gussverfahren, wie z.B. einem Spritzgussverfahren.

Vorzugsweise ist der Hohldorn 13 so geformt, dass der Aussenumfang und/oder der Aussendurchmesser des Hohldorns 13 sich in axialer Richtung verändert. Dies ist insbesondere vorteilhaft in Kombination mit elastischen, flexiblen und/oder kompressiblen ersten Enden der Membranleitungen 2.

Das Einführen der Hohldorne 13 in die Membranleitungen 2 kann erleichtert werden, wenn der Aussenumfang und/oder der Aussendurchmesser des Hohldorns 13 an dessen distalen Ende kleiner oder gleich ist, wie der Innenumfang und/oder Innendurchmesser der Membranleitungen 2. Vorzugsweise verringert sich der Aussenumfang und/oder der Aussendurchmesser des Hohldorns 13 in einem ersten Bereich entlang der axialen Richtung zu dem distalen Ende hin von einem Aussenumfang und/oder der Aussendurchmesser des Hohldorns 13 der grösser ist als der Innenumfang und/oder Innendurchmesser der Membranleitungen 2, hin zu einem Aussenumfang und/oder der Aussendurchmesser des Hohldorns 13, der kleiner ist als der Innenumfang und/oder Innendurchmesser der Membranleitungen 2. Vorzugsweise ist diese Verringerung in dem ersten Bereich stetig und/oder kontinuierlich. Diese kontinuierliche Verringerung kann auch durch eine Mehrzahl von kleinen Stufen im Umfang und/oder Durchmesser erreicht werden. Ein solcher erster Bereich ist zum Beispiel in den Ausführungsbeispielen der Fig. 3, 4, 6, 7 und 8 zu sehen.

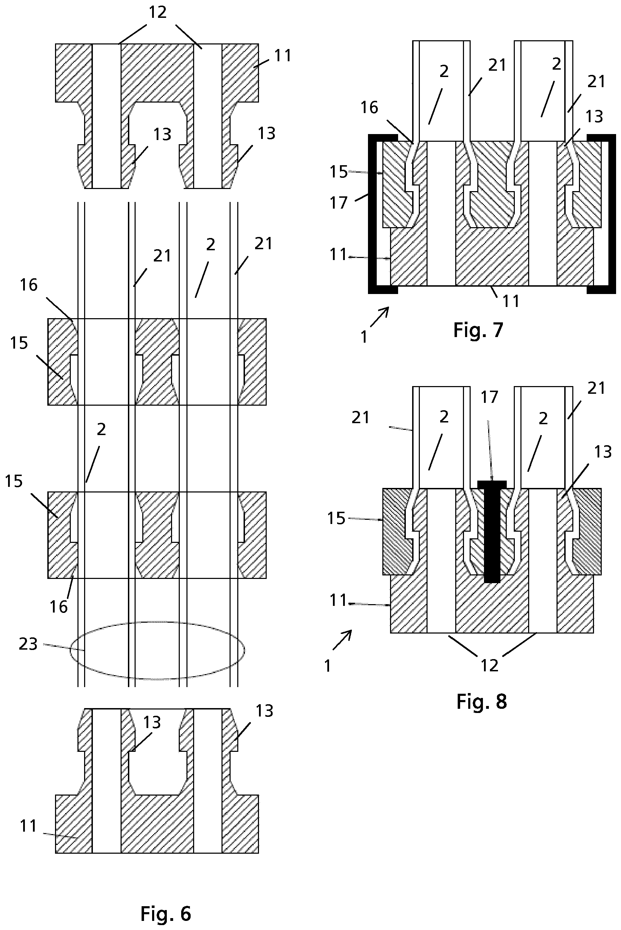

Durch die Veränderung des Umfangs und/oder Durchmessers über die axiale Richtung des Hohldorns 13 kann ebenfalls die Membranleitung 2 zu dem Hohldorn 13 besser abgedichtet werden und/oder den Halt der Membranleitung 2 in axialer Richtung verbessert. Der oben beschriebene erste Bereich trägt ebenfalls zu eine besseren Abdichtung oder einem besseren Halt bei. Vorzugsweise weist der Hohldorn 13 alternativ oder zusätzlich einen zweiten Bereich entlang der axialen Richtung des Hohldorns 13 auf, in dem sich der Aussenumfang und/oder der Aussendurchmesser des Hohldorns 13 zum distalen Ende hin vergrössert. In Kombination mit dem ersten Bereich würde sich der Aussenumfang und/oder der Aussendurchmesser des Hohldorns 13 in axialer Richtung zum distalen Ende hin zuerst in dem zweiten Bereich vergrössern und danach in dem ersten Bereich wieder verkleinern. Die Vergrösserung des Aussendurchmessers/-umfangs kann dabei kontinuierlich realisiert sein (siehe Ausführungsbeispiel in Fig. 4) oder auch in einer einzigen Stufe realisiert sein (Ausführungsbeispiel in Fig. 6 bis 8).

In einem Ausführungsbeispiel weist der Hohldorn 13 alternativ oder zusätzlich zu dem ersten und/oder zweiten Bereich einen dritten Bereich entlang der axialen Richtung des Hohldorns 13 auf, in dem sich der Aussenumfang und/oder der Aussendurchmesser des Hohldorns 13 zum distalen Ende hin verringert. In Kombination mit dem ersten und zweiten Bereich würde sich der Aussenumfang und/oder der Aussendurchmesser des Hohldorns 13 in axialer Richtung zum distalen Ende hin zuerst in dem dritten Bereich verringern, dann in dem zweiten Bereich vergrössern und danach in dem ersten Bereich wieder verkleinern.

Der Aussenumfang und/oder der Aussendurchmesser des Hohldorns 13 kann/können aber auch in axialer Richtung konstant bleiben, wie dies in Fig. 5 gezeigt ist.

Das Anschlusselement 11 ist vorzugsweise als Anschlussplatte 11 ausgebildet. Die Hohldorne 13 stehen dabei so aus der Anschlussplatte 11 hervor, dass die axiale Richtung der Hohldorne 13 orthogonal zu der Plattenebene der Anschlussplatte 11 angeordnet ist. Die Fluidöffnungen 12 erstrecken sich vorzugsweise ebenfalls rechtwinkelig zu der Plattenebene der Anschlussplatte 11. Vorzugsweise sind die Hohldorne 13 auf einer ersten Seite des Anschlusselements bzw. der Anschlussplatte 11 angeordnet und die Fluidöffnungen 12 auf einer der ersten Seite gegenüberliegenden zweiten Seite des Anschlusselements 11 angeordnet.

Vorzugsweise schliesst eine Aussenhülle 3 die Membranleitungen 2 so ein, so dass ein Fluidraum 4 zwischen dem Anschluss 1, der Aussenhülle 3 und den Aussenseiten der Membranleitungen 2 gebildet wird. Der Fluidraum 4 ist ausgebildet, einen Stoff zu enthalten, der aus den Membranleitungen 2 und/oder in die Membranleitungen 2 durch deren Wandungen 21 transportiert wird. Vorzugsweise erstreckt sich die Aussenhülle zwischen zwei Anschlüssen 1, so dass der Fluidraum 4 zwischen den zwei Anschlüssen 1, der Aussenhülle 3 und den Aussenseiten der Membranleitungen 2 gebildet wird. Vorzugsweise ist die Aussenhülle in Form einer Rohr- oder Schlauchleitung ausgebildet. Der Fluidraum 4 kann einen oder mehrere Anschlüsse aufweisen, um den durch die Wandung 21 zu transportierenden Stoff einzuführen und/oder abzuführen. Vorzugsweise weist der Fluidraum 4 einen Anschluss zum Einführen und einen Anschluss zum Ausführen eines Stoffes auf.

In einem Ausführungsbeispiel kann der erste Anschluss zu dem zweiten Anschluss verdreht werden, so dass die Membranleitungen 2 nicht mehr parallel zu der Verbindungslinie zwischen den beiden Anschlüssen 1 verläuft. Dies kann zum Beispiel dadurch erreicht werden, dass die Membranleitungen 2 länger gewählt werden als der Abstand zwischen den beiden Anschlüssen 1. Dadurch kann bei gleichem Platzbedarf, die Membranfläche der Membranleitungen 2 erhöht werden. Diese Verdrehung erlaubt auch eine Steuerung des Durchflussquerschnitts und damit der Verweildauer des Fluids in den Membranleitungen 2.

Vorzugsweise weist der Anschluss 1 Anpressmittel auf, das die Aussenseiten der Membranleitungen 2 auf die Hohldorne 13 drückt. Der Druck wird dabei vorzugsweise radial zu der axialen Achse der Hohldorne 13 hin ausgeübt. Dies verbessert die Dichtung zwischen Hohldornen 13 und Membranleitungen 2 und/oder verbessert den Halt der Membranleitungen 2 auf den Hohldornen 13 in axialer Richtung der Hohldorne 13.

Fig. 4 zeigt eine Schlauchschelle 14.1 als Anpressmittel. Die Schlauchschelle schliesst sich um den Umfang der Membranleitung 2 und drückt diese radial auf den Hohldorn 13. In einem Ausführungsbeispiel weist das Anpressmittel eine Mehrzahl von Schlauchschellen 14.1 auf, die jeweils eine Membranleitung 2 auf einen Hohldorn 13 eines Anschlusssegments pressen. Bei einer hohen Anzahl von Membranleitungen 2 und/oder bei Membranleitungen 2 mit kleinen Durchmessern ist diese Befestigungsmethode aufwendig.

Fig. 5 zeigt einen Schrumpfschlauch 14.2 als Anpressmittel, der in dem Bereich des Hohldorns 13 angeordnet und im geschrumpften Zustand radial auf die Membranleitung 2 drückt. In einem Ausführungsbeispiel weist das Anpressmittel eine Mehrzahl von Schrumpfschläuchen 14.2 auf, die jeweils eine Membranleitung 2 auf einen Hohldorn 13 eines Anschlusssegments pressen. Die Schrumpfschläuche 14.2 werden dabei auf die ersten Enden der Membranleitungen 2 gestülpt. Dann werden die ersten Enden der Membranleitungen 2 auf die Hohldorne 13 der Anschlusssegmente gesteckt. Evtl. muss der Schrumpfschlauch 14.2 noch verschoben werden, dass er im Bereich des Hohldorns 13 angeordnet ist. Durch Erhitzen schrumpft der Durchmesser des Schrumpfschlauchs 14.2 und presst die Membranleitung 2 radial gegen den Hohldorn 13. Bei einer hohen Anzahl von Membranleitungen 2 ist diese Befestigungsmethode weiterhin aufwendig. Aber der Schritt des Verkleinerns des Durchmessers des Schrumpfschlauchs 14.2 kann einfach durch eine gleichzeitig durchgeführte Wärmebehandlung erreicht werden, anstatt durch sequentiell durchgeführte mechanische Arbeitsschritte.

Ein weiteres Ausführungsbeispiel eines Anpressmittels ist ein Gegenelement 15 mit entsprechenden Ausnehmungen 16 für die Hohldorne 13 des Anschlusselements 11. Fig. 6 bis 8 zeigen ein Ausführungsbeispiel eines solchen Gegenelements 15. Das Gegenelement 15 weist eine erste Seite und eine der ersten Seite gegenüberliegende zweite Seite auf. Die erste Seite zeigt im montierten Zustand zu dem Anschlusselement 11 des gleichen Anschluss 1. Die Ausnehmungen 16 sind durchgehend von der ersten Seite zu der zweiten Seite ausgebildet, so dass die Membranleitungen 2 und/oder die Hohldorne 13 durch die Ausnehmungen 16 geführt werden können. Die Ausnehmungen 16 sind so in dem Gegenelement 15 angeordnet, dass mehrere oder alle Hohldorne 13 des Anschlusselements 11 gleichzeitig in die entsprechenden Ausnehmungen 16 gesteckt werden können, wenn das Gegenelement 15 auf das Anschlusselement 11 gesteckt wird. Die Ausnehmungen 16 sind so ausgebildet, dass eine Membranleitung 2 zwischen jeder Ausnehmung 16 und dem entsprechenden Hohldorn 13 angeordnet werden kann bzw. eingeklemmt werden kann. Die Ausnehmungen 16 und/oder die Hohldorne 13 sind so ausgebildet, dass die zwischen einer Ausnehmung 16 und einem Hohldorn 13 angeordnete Membranleitung 2 radial gegen den entsprechenden Hohldorn 13 gedrückt wird. In einem Ausführungsbeispiel verändert sich der Innendurchmesser der Ausnehmung 16 in einer Richtung von der ersten zu der zweiten Seite des Gegenelements 15. Dies ist insbesondere vorteilhaft in Kombination mit Hohldornen 13, deren Aussenumfang und/oder deren Aussendurchmesser sich in axialer Richtung verändern. Vorzugsweise entsprechen die Ausnehmungen 16 grundsätzlich der negativen Form der Hohldorne 13. Grundsätzlich bedeutet hierbei, dass die Ausnehmungen 13 nur in einem Teilbereich der negativen Form der Hohldorne 13 entspricht und/oder dass die Ausnehmungen 13 der negativen Form der Hohldorne 13 sehr ähnlich ist und/oder dass die Form der Ausnehmungen 16 etwas grösser oder kleiner als die negative Form der Hohldorne 13 ist. Eine etwas kleinere Form der Ausnehmungen 16 im Vergleich zu den Hohldornen 13 könnte zum Beispiel durch die Elastizität des Materials des Hohldorns 13 oder des Gegenelements 15 begründet werden. Eine etwas grössere Form im Vergleich zu den Hohldornen 13 könnte zum Beispiel durch die Wandungsdicke der Membranleitungen 2 oder durch einen Maximaldurchmesser des Hohldorns 13 begründet werden. Das Gegenelement 15 kann aus einem harten und/oder steifen Material ausgebildet sein, z.B. Metall oder Hartkunststoff. Das Gegenelement 15 kann aber auch aus einem elastischen und/oder kompressiblen Material ausgebildet sein. Das Gegenelement 15 ist vorzugsweise mittels eines additiven Herstellungsverfahrens, z.B. eines 3D Druckverfahrens hergestellt. Das Gegenelement 15 ist vorzugsweise als Gegenplatte 15 ausgebildet. Dabei ist die erste und zweite Seite der Gegenplatte 15 vorzugsweise parallel. Dabei erstrecken sich die Längsachsen der Ausnehmungen 16 vorzugsweise parallel zu dem Orthonormalenvektor der ersten oder zweiten Seite der Gegenplatte 15. Die Gegenplatte 15 ist vorzugsweise parallel zu der Anschlussplatte 11 angeordnet.

Zur Befestigung der Membranleitungen 2 an dem Anschluss 1 werden die Membranleitungen 2 durch die Ausnehmungen 16 des Gegenelements 15 gefädelt. Wenn auch der zweite Anschluss 1 ein Gegenelement 16 aufweist, wie im Fall von Fig. 6, so können die Gegenelemente 16 so übereinander gelegt werden, dass die Ausnehmungen 16 überlappen und/oder dass die beiden zweiten Seiten aneinander angrenzen. Die Membranleitungen 2 können so gleich durch die Ausnehmungen 16 der beiden Gegenelemente 16 gefädelt werden. Dies hat einmal den Vorteil, dass der Durchfädelvorgang pro Membranleitung 2 nur einmal durchgeführt werden muss und zusätzlich, dass die Membranleitungen 2 zwischen den beiden Anschlüssen 1 immer parallel angeordnet sind bzw. sich nicht überkreuzen. Diese Situation ist in Fig. 6 gezeigt. Danach werden die Membranleitungen 2 auf die Hohldorne 13 gesteckt. Dabei wird die Membranleitung 2, die durch eine bestimmte Ausnehmung 16 verläuft, auf den Hohldorn 13 gesteckt, der gegenüber der bestimmten Ausnehmung 16 liegt bzw. der später die bestimmte Ausnehmung 16 empfängt. Für einen Anschluss 1 können natürlich auch zuerst die ersten Enden der Membranleitungen 2 auf die Hohldorne 13 gesteckt werden und danach die zweiten Enden der Membranleitungen 2 (von der ersten Seite zu der zweiten Seite des Gegenelements 15) durch die Ausnehmungen 16 des Gegenelements 15 gefädelt werden. Nun kann das Gegenelement 15 auf den Membranleitungen 2 zu dem Anschlusselement 11 hin verschoben werden, bis die Ausnehmungen 16 auf den Hohldornen 13 angeordnet sind und die Membranleitungen 2 auf die Hohldorne 13 drücken. Vorzugsweise liegt die erste Seite des Gegenelements bzw. der Gegenplatte 15 auf der Seite des Anschlusselements bzw. der Anschlussplatte 11 mit den Hohldornen 13 auf. Zusätzlich kann das Gegenelement 15 auf dem Anschlusselement 11 mit Befestigungsmitteln 17, wie zum Beispiel einer Klammer (siehe Fig. 7) oder einer Schraube (siehe Fig. 8) befestigt werden. Wenn es einen gleichartigen zweiten Anschluss 1 gibt, so wird die gleiche Montageprozedur für den zweiten Anschluss 1 durchgeführt. Gleichartig muss dabei nicht identisch heissen, sondern nur, dass der zweite Anschluss 1 (zumindest einen Teil) der oben beschriebenen Merkmale des ersten Anschluss 1 aufweist. Wenn es eine Aussenhülle 3 gibt, so wird diese auf dem Anschluss 1 und evtl. dem zweiten Anschluss 1 befestigt, so dass ein Bündel 23 aus Membranleitungen 2 in der Aussenhülle 3 eingeschlossen wird.

Das Gegenelement 15 mit Ausnehmungen 16 in Kombination mit dem Anschlusselement 11 mit Hohldornen 13 erlaubt eine besonders einfache und schnelle Befestigung der Membranleitungen 2, auch wenn die Anzahl der Membranleitungen 2 hoch ist.

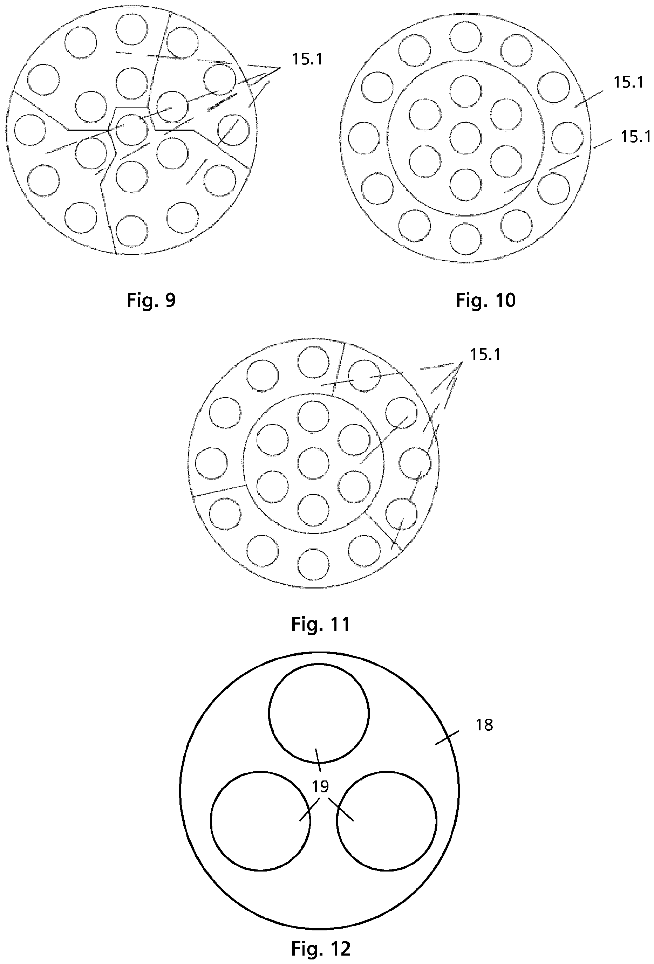

Fig. 9 bis 11 zeigen Ausführungsbeispiele eines Gegenelements 15 mit mindestens zwei Teilgegenelementen 15.1. Jedes Teilgegenelement 15.1 weist eine Mehrzahl an Ausnehmungen 16 auf. Die Aufteilung des Gegenelements 15 in mehrere Teilgegenelemente 15.1 erlaubt zum Beispiel einen schnelleren Austausch eines Gegenelementteils 15.1, da nicht alle Membranleitungen 2 von den Hohldornen 13 des Anschlusselements 11 entfernt werden müssen, sondern nur die, die durch die Ausnehmungen 16 des Gegenelementteils 15.1 geführt sind. In dem zweiten Ausführungsbeispiel in Fig. 10 sind die Teilgegenelemente 15.1 konzentrisch angeordnet.

Fig. 12 zeigt ein Ausführungsbeispiel eines Aufnahmeelements 18 eines Anschlusses 1 zur Aufnahme mehrerer Anschlusselemente 11. Das Aufnahmeelement 18 weist eine Mehrzahl an Aufnahmestationen 19 auf, die jeweils ein Anschlusselement 11 aufnehmen können. In einem Ausführungsbeispiel enthält das Aufnahmeelement 18 sieben Aufnahmestationen 19. Dies erlaubt eine optimale Packungsdichte. Die Aufnahmestationen 19 sind vorzugsweise gleich ausgebildet, so dass die gleichen Anschlusselemente 11 verwendet werden können, um die Durchflussmenge modular zu steuern. Jede Aufnahmestation 19 ist über eine Fluidverbindung mit einer Fluidanschlussvorrichtung des Anschlusses 1 verbunden ist. Es kann auch eine Verbindung zum Rohrleitungssystem über einen gemeinsamen Anschluss für alle Aufnahmestationen erfolgen. Jede Aufnahmestation 19 ist so ausgebildet, dass ein Anschlusselement 11 dichtend aufgenommen wird. Dadurch kann das Fluid von der Fluidanschlussvorrichtung des Anschlusses 1 zu der Fluidaufnahmevorrichtung 19 durch die Anschlusssegmente des Anschlusselements 11 zu den Membranleitungen 2 oder in die entgegengesetzte Richtung in umgekehrter Reihenfolge fliessen. Die Aufnahmestationen 19, die nicht verwendet werden, können zum Beispiel durch Abschlusselemente verschlossen werden. Eine mögliche Aussenhülle 3 könnte auf dem Aufnahmeelement 18 bzw. zwischen zwei Aufnahmeelementen 18 zweier Anschlüsse 1 angeordnet werden.

## Patentansprüche

1. Vorrichtung zum Verarbeiten eines Fluids, aufweisend:
eine Mehrzahl von Membranleitungen (2);
ein Anschluss (1) mit einem Anschlusselement (11), wobei das Anschlusselement (11) eine Mehrzahl von Anschlusssegmenten aufweist, wobei jedes Anschlusssegment eine Fluidöffnung (12) aufweist und mit einem ersten Ende einer der Membranleitungen (2) verbunden ist,
die Fluidöffnung (12) jedes Anschlusssegments jeweils in einen Hohldorn (13) des Anschlusssegments mündet, auf dem die mit dem Anschlusssegment verbundene Membranleitung (2) befestigt ist
**dadurch gekennzeichnet, dass**
das Anschlusselement (11) so ausgebildet ist, dass zumindest eine Untergruppe der Anschlusssegmente mit einer Mehrzahl an Anschlusssegmenten einstückig ausgebildet ist.

2. Vorrichtung nach Anspruch 1, wobei sich der Aussenumfang und/oder Aussendurchmesser der Hohldorne (13) in axialer Richtung der Hohldorne (13) verändert, um das Einführen der Hohldorne (13) in die Membranleitungen (2) zu erleichtern und/oder um die Membranleitung (2) zu dem Hohldorn (13) besser abzudichten.

3. Vorrichtung nach Anspruch 1 oder 2, wobei der Anschluss (1) ein Anpressmittel aufweist, das Aussenseiten der Membranleitungen (2) auf die Hohldorne (13) drückt.

4. Vorrichtung nach Anspruch 3, wobei das Anpressmittel eine Mehrzahl von Schrumpfschläuchen aufweist, die auf der Aussenseite der Membranleitungen im Bereich der Hohldorne (13) angeordnet sind und im geschrumpften Zustand die Membranleitung radial auf die Hohldorne (13) drücken.

5. Vorrichtung nach Anspruch 3, wobei das Anpressmittel ein Gegenelement (15) ist, das eine Mehrzahl von Ausnehmungen (16) aufweist, die die Hohldorne (13) mit den Membranleitungen (2) umfänglich umschliessen und so geformt sind, dass das Gegenelement (15) auf die Aussenseite der Membranleitungen (2) drücken.

6. Vorrichtung nach Anspruch 5, wobei die Ausnehmungen (16) in dem Gegenelement (15) so angeordnet sind, dass mehrere oder alle Hohldorne (13) des Anschlusselements (11) gleichzeitig in die entsprechenden Ausnehmungen (16) gesteckt werden können, wenn das Gegenelement (15) auf das Anschlusselement (11) gesteckt wird.

7. Vorrichtung nach einer Kombination des Anspruchs 2 und einem der Ansprüche 5 oder 6, wobei die Ausnehmungen (16) grundsätzlich die negative Form der entsprechenden Hohldorne (13) haben.

8. Vorrichtung nach einem der Ansprüche 1 bis 7, wobei das Anschlusselement (11) als Platte ausgebildet ist aus der die Hohldorne (13) in Verlängerung der Fluidöffnungen (12) hervorstehen.

9. Vorrichtung nach einer Kombination des Anspruchs 8 und einem der Ansprüche 5 bis 7, wobei das Gegenelement (15) als Gegenplatte (15) ausgebildet ist, wobei die Gegenplatte (15) parallel zu der Anschlussplatte (11) angeordnet ist.

10. Vorrichtung nach einem der Ansprüche 1 bis 9, aufweisend einen weiteren Anschluss (1) mit einem Anschlusselement (11), wobei das Anschlusselement (11) des weiteren Anschluss (1) eine Mehrzahl von Anschlusssegmenten aufweist, wobei jedes weitere Anschlusssegment des weiteren Anschluss (1) eine Fluidöffnung (12) und einen Hohldorn 13 aufweist und mit einem zweiten Ende einer der Membranleitungen (2) verbunden ist, wobei die Fluidöffnung (12) jedes Anschlusssegments des weiteren Anschluss (1) jeweils in einen Hohldorn (13) des Anschlusssegments des weiteren Anschluss (1) mündet, auf dem die mit dem Anschlusssegment verbundene Membranleitung (2) befestigt ist.

11. Vorrichtung nach einem der Ansprüche 1 bis 10, wobei eine Aussenhülle die Membranleitungen (2) einschliesst, so dass ein Fluidraum zwischen dem Anschluss (1), der Aussenhülle und den Aussenseiten der Membranleitungen (2) gebildet wird.

12. Herstellungsverfahren aufweisend:
Bereitstellen eines Anschlusselements (11), das eine Mehrzahl von Anschlusssegmenten aufweist, wobei jedes Anschlusssegment eine Fluidöffnung (12) und einen Hohldorn (13) aufweist, wobei die Fluidöffnung (12) in den Hohldorn (13) des Anschlusssegments mündet;
Axiales Aufschieben eines ersten Endes einer Membranleitung (2) auf jeden Hohldorn (13) des Anschlusselements (11), so dass das erste Ende der Membranleitung (2) den Hohldorn (2) umfänglich umschliesst,
**dadurch gekennzeichnet, dass**
zumindest eine Untergruppe der Anschlusssegmente mit einer Mehrzahl an Anschlusssegmenten aus einem Materialstück hergestellt wird.

13. Herstellungsverfahren nach Anspruch 12, wobei das Bereitstellen des Anschlusselements (11), das Herstellen des Anschlusselements (11) mit einem additiven Herstellungsverfahren aufweist.

14. Herstellungsverfahren nach Anspruch 12 oder 13, weiter aufweisend :
Anbringen von Anpressmitteln an Aussenseiten der Membranleitungen im Bereich der Hohldorne, so dass die Membranleitungen zur besseren Dichtung und/oder zum besseren axialen Halt auf die Hohldorne (13) gedrückt werden.

## Claims

1. Device for processing a fluid, comprising:
a plurality of membrane channels (2);
a connector (1) having a connecting element (11), the connecting element (11) having a plurality of connecting segments, each connecting segment having a fluid opening (12) and being connected to a first end of one of the membrane channels (2),
the fluid opening (12) of each connection segment opens into a hollow mandrel (13) of the connection segment, on which the membrane channel (2) connected to the connection segment is fixed
**characterized in that**
the connecting element (11) is arranged such that at least a subgroup of the connecting segments with a plurality of connecting segments is formed in one-piece.

2. Device according to claim 1, wherein the outer circumference and/or outer diameter of the hollow mandrels (13) changes in the axial direction of the hollow mandrels (13) in order to facilitate the insertion of the hollow mandrels (13) into the membrane channels (2) and/or in order to better seal the membrane channel (2) of the hollow mandrel (13).

3. Device according to claim 1 or 2, wherein the connector (1) has a pressing means which presses the outside of the membrane channels (2) onto the hollow mandrels (13).

4. Device according to claim 3, wherein the pressing means comprises a plurality of shrink tubes, arranged on the outside of the membrane channels within the region of the hollow mandrels (13) and when in the shrunk state they press the membrane channel radially onto the hollow mandrels (13).

5. Device according to claim 3, wherein the pressing means is a counter element (15) which has a plurality of recesses (16) which integrally surround the hollow mandrels (13) with the membrane channels (2) and are shaped in such a way that the counter element (15) presses on the outside of the membrane channels (2).

6. The device according to claim 5, wherein the recesses (16) in the counter element (15) are arranged such that several or all of the hollow mandrels (13) of the connecting element (11) can be inserted simultaneously into the corresponding recesses (16) when the counter element (15) is placed on the connecting element (11).

7. Device according to a combination of claim 2 and one of claims 5 or 6, whereby the recesses (16) basically have the negative shape of the corresponding hollow mandrels (13).

8. Device according to one of claims 1 to 7, wherein the connecting element (11) is designed as a plate from which the hollow mandrels (13) protrude extending the fluid openings (12).

9. Device according to a combination of claim 8 and one of claims 5 to 7, wherein the counter element (15) is designed as a counter plate (15), the counter plate (15) being arranged parallel to the connection plate (11).

10. Device according to one of claims 1 to 9, comprising a further connection (1) with a connecting element (11), wherein the connecting element (11) of the further connection (1) comprises a plurality of connection segments, wherein each further connection segment of the further connection (1) comprises a fluid opening (12) and a hollow mandrel (13) and is connected to a second end of one of the membrane channels (2), wherein the fluid opening (12) of each connection segment of the further connection (1) opens into a hollow mandrel (13) of the connection segment of the further connection (1), on which the membrane channel (2) connected to the connection segment is fixed.

11. Device according to any one of claims 1 to 10, wherein an outer shell encloses the membrane channels (2) so that a fluid space is formed between the connection (1), the outer shell and the outer sides of the membrane channels (2).

12. A manufacturing method comprising:
providing a connecting element (11) comprising a plurality of connector segments, each connector segment comprising a fluid opening (12) and a hollow mandrel (13), the fluid opening (12) opening into the hollow mandrel (13) of the connector segment;
axially pushing a first end of a membrane channel (2) onto each hollow mandrel (13) of the connecting element (11) so that the first end of the membrane channel (2) integrally surrounds the hollow mandrel (2),
**characterized in that**,
at least a subgroup of the connecting segments with a plurality of connecting segments is made from one piece of material.

13. Manufacturing method according to claim 12, wherein providing the connecting element (11) comprises manufacturing the connecting element (11) with an additive manufacturing process.

14. Manufacturing method according to claim 12 or 13, further comprising:
mounting pressing means on the outside of the membrane conduits in the region of the hollow mandrels, so that the membrane channels are pressed onto the hollow mandrels (13) for better sealing and/or for better axial retention.

## Revendications

1. Dispositif pour le traitement d'un fluide, présentant :
une pluralité de conduites membranaires (2) ;
un raccord (1) avec un élément de raccord (11), l'élément de raccord (11) présentant une pluralité de segments de raccord, chaque segment de raccord présentant une ouverture de fluide (12) et étant connecté à une première extrémité de l'une des conduites membranaires (2),
l'ouverture de fluide (12) de chaque segment de raccord débouchant à chaque fois dans un mandrin creux (13) du segment de raccord sur lequel est fixée la conduite membranaire (2) connectée au segment de raccord,
**caractérisé en ce que**
l'élément de raccord (11) est réalisé de telle sorte qu'au moins un sous-groupe des segments de raccord soit réalisé d'une seule pièce avec une pluralité de segments de raccord.

2. Dispositif selon la revendication 1, dans lequel la périphérie extérieure et/ou le diamètre extérieur des mandrins creux (13) varient dans la direction axiale des mandrins creux (13) afin de faciliter l'introduction des mandrins creux (13) dans les conduites membranaires (2) et/ou afin de mieux étanchéifier la conduite membranaire (2) par rapport au mandrin creux (13).

3. Dispositif selon la revendication 1 ou 2, dans lequel le raccord (1) présente un moyen de pressage qui presse les côtés extérieurs des conduites membranaires (2) sur les mandrins creux (13).

4. Dispositif selon la revendication 3, dans lequel le moyen de pressage présente une pluralité de tuyaux rétractables qui sont disposés sur le côté extérieur des conduites membranaires dans la région des mandrins creux (13) et qui, dans l'état rétracté, pressent la conduite membranaire radialement sur les mandrins creux (13).

5. Dispositif selon la revendication 3, dans lequel le moyen de pressage est un élément complémentaire (15) qui présente une pluralité d'évidements (16) qui entourent, sur la périphérie, les mandrins creux (13) avec les conduites membranaires (2) et qui sont formés de manière à presser l'élément complémentaire (15) sur le côté extérieur des conduites membranaires (2).

6. Dispositif selon la revendication 5, dans lequel les évidements (16) dans l'élément complémentaire (15) sont disposés de telle sorte que plusieurs ou la totalité des mandrins creux (13) de l'élément de raccord (11) puissent être enfichés simultanément dans les évidements correspondants (16) lorsque l'élément complémentaire (15) est enfiché sur l'élément de raccord (11).

7. Dispositif selon une combinaison de la revendication 2 et de l'une des revendications 5 et 6, dans lequel les évidements (16) présentent en principe la forme négative des mandrins creux correspondants (13).

8. Dispositif selon l'une quelconque des revendications 1 à 7, dans lequel l'élément de raccord (11) est réalisé sous forme de plaque de laquelle font saillie des mandrins creux (13) dans le prolongement des ouvertures de fluide (12).

9. Dispositif selon une combinaison de la revendication 8 et de l'une des revendications 5 à 7, dans lequel l'élément complémentaire (15) est réalisé sous forme de plaque complémentaire (15), la plaque complémentaire (15) étant disposée parallèlement à la plaque de raccord (11).

10. Dispositif selon l'une quelconque des revendications 1 à 9, présentant un raccord supplémentaire (1) avec un élément de raccord (11), l'élément de raccord (11) du raccord supplémentaire (1) présentant une pluralité de segments de raccord, chaque segment de raccord supplémentaire du raccord supplémentaire (1) présentant une ouverture de fluide (12) et un mandrin creux (13) et étant connecté à une deuxième extrémité de l'une des conduites membranaires (2), l'ouverture de fluide (12) de chaque segment de raccord du raccord supplémentaire (1) débouchant à chaque fois dans un mandrin creux (13) du segment de raccord du raccord supplémentaire (1) sur lequel est fixée la conduite membranaire (2) connectée au segment de raccord.

11. Dispositif selon l'une quelconque des revendications 1 à 10, dans lequel une enveloppe extérieure entoure les conduites membranaires (2) de telle sorte qu'un espace fluidique entre le raccord (1), l'enveloppe extérieure et les côtés extérieurs des conduites membranaires (2) soit formé.

12. Procédé de fabrication, présentant les étapes suivantes :
fourniture d'un élément de raccord (11) qui présente une pluralité de segments de raccord, chaque segment de raccord présentant une ouverture de fluide (12) et un mandrin creux (13), l'ouverture de fluide (12) débouchant dans le mandrin creux (13) du segment de raccord ;
enfoncement axial d'une première extrémité d'une conduite membranaire (2) sur chaque mandrin creux (13) de l'élément de raccord (11) de telle sorte que la première extrémité de la conduite membranaire (2) entoure le mandrin creux (2) sur sa périphérie,
**caractérisé en ce que**
au moins un sous-groupe des segments de raccord est fabriqué avec une pluralité de segments de raccord en une pièce.

13. Procédé de fabrication selon la revendication 12, dans lequel la fourniture de l'élément de raccord (11) comporte la fabrication de l'élément de raccord (11) avec un procédé de fabrication additif.

14. Procédé de fabrication selon la revendication 12 ou 13, présentant en outre :
le montage de moyens de pressage sur des côtés extérieurs des conduites membranaires dans la région des mandrins creux de telle sorte que les conduites membranaires soient pressées sur les mandrins creux (13) en vue d'obtenir une meilleure étanchéité et/ou une meilleure tenue axiale.
